# EUROPÄISCHE PATENTSCHRIFT

(11) **EP 0 733 672 B1**
(45) Veröffentlichungstag und Bekanntmachung des Hinweises auf die Patenterteilung: **03.09.1997**
(21) Anmeldenummer: 95104158.1
(22) Anmeldetag: 22.03.1995
(51) Int. Cl.: C08K 7/22, C08K 9/02

(54) **Verfahren zum Herstellen eines geschäumten oder ungeschäumten weich-elastischen Silikonelastomers, insbesondere für Dichtungszwecke**
Method of manufacturing a (foamed) soft elastic silicone elastomer, especially for sealing purposes
Méthode pour préparer un mousse molle élastique silicone élastomérique, particulièrement pour joints d'étanchéité

(43) Veröffentlichungstag der Anmeldung: 25.09.1996
(73) Patentinhaber: ERNST SONDERHOFF GmbH & Co. KG, D-50829 Köln (DE)
(72) Erfinder: Westhoff, Heinz, D-50827 Köln (DE); Giesen, Franz-Josef, D-50935 Köln (DE)
(74) Vertreter: Vollbach, Hans, Dipl.-Ing.

(56) Entgegenhaltungen:
- EP-A- 0 553 843
- US-A- 5 202 362

## Beschreibung

Die Erfindung betrifft ein Verfahren zum Herstellen eines geschäumten oder ungeschäumten weich-elastischen Silikonelastomers, insbesondere für Dichtungszwecke, wie vor allem für Gehäuse- und Deckeldichtungen, unter Verwendung eines zweikomponentigen, additionsvernetzenden Silikonsystems entsprechend der im Oberbegriff des Patentanspruchs 1 angegebenen Art.

Ein Verfahren dieser Art, auf das sich die Erfindung bevorzugt bezieht, ist aus der EP 0 416 229 B1 bekannt. Bei diesem Verfahren erfolgt die Verarbeitung des zweikomponentigen Silikonsystems mittels einer Niederdruck-Zweikomponenten-Misch- und Dosieranlage. Es hat sich gezeigt, daß mit dieser verfahrensmäßig gut zu beherrschenden Verarbeitungstechnik äußerst hochwertige Silikonschaumstoffdichtungen ohne Wärmezufuhr, also bei Umgebungstemperatur, herstellbar sind, wenn einerseits der Zusatz an Wasser als Treibmittel zu dem Reaktionsgemisch auf höchstens 2 Gew.-%, bezogen auf die Menge an Silikonpolymer, begrenzt wird und wenn andererseits das aus den beiden Komponenten bestehende spezifische Reaktionsgemisch mittels einer Niederdruck-Zweikomponenten-Misch- und Dosieranlage verarbeitet wird, deren Mischkopf ein in einem engen Mischkanal mit hoher Geschwindigkeit rotierendes stabförmiges Mischorgan aufweist, wobei die Drehzahl des Mischorgans bei 3000 bis 8000 U/min. liegt und der axial durch den Mischkopf hindurchführende Mischkanal im Querschnitt so eingestellt ist, daß der Durchgangsspalt zwischen der Kanalwandung und dem axial im Mischkanal rotierenden Mischorgan äußerst eng bemessen ist, d.h. bei 0,5 bis 3 mm liegt. Die nach dieser Verfahrensweise hergestellten hochwertigen Silikonschäume sind allerdings erheblich teurer als die herkömmlichen Polyurethanschaumstoffe, so daß ihrer Anwendung Grenzen gesetzt sind.

Polyurethanschaumstoffe weisen bekanntlich ein dauerelastisches Verhalten bis zu einer Temperatur von +90°C auf. Silikonschäume sind hinsichtlich ihrer Temperatur- und Chemikalienbeständigkeit den Polyurethanschäumen überlegen. Ihre Temperaturbeständigkeit liegt in der Größenordnung von 200 bis 300°C. Allerdings haben die Silikonschäume jedoch einen 5-fach höheren Preis gegenüber den für Dichtungszwecke verwendeten Polyurethanschäumen. Die hohe Temperaturbeständigkeit der Silikone wird in vielen Anwendungsbereichen, in denen die Silikone im Einsatz thermisch belastet werden, z.B. bei Kraftfahrzeugen in der Automobilindustrie, nicht voll ausgeschöpft. Der bevorzugte Temperaturbereich liegt hier im allgemeinen bei 100 bis 150°C, einem Temperaturbereich, der die Verwendung der wesentlich billigeren Polyurethan-Schaumstoffdichtungen ausschließt.

Es ist daher Aufgabe der Erfindung, das gattungsgemäße Verfahren so weiterzuentwickeln, daß insbesondere für Dichtungszwecke, wie vor allem für Gehäuse- oder Deckeldichtungen, sowie für sonstige thermisch belastete Dichtungen geeignete Silikone in Form eines Silikonelastomers oder eines Silikonschaumstoffs erhalten werden können, die bei Wahrung der guten Festigkeitseigenschaften, des Elastizitätsverhaltens und der guten chemischen Beständigkeit der Silikone eine Temperaturbeständigkeit aufweisen, die erheblich über derjenigen der Polyurethanerzeugnisse liegt, wobei aber die Silikonerzeugnisse erheblich preiswerter als die herkömmlichen Silikonmassen hergestellt werden sollen.

Diese Aufgabe wird erfindungsgemäß mit den im Kennzeichen des Patentanspruchs 1 angegebenen Merkmalen gelöst.

Es ist in der Kunststofftechnik bekannt und üblich, den Reaktionskomponenten der Polyurethan- und Silikonsysteme Füllstoffe unterschiedlicher Art zuzusetzen. Hiermit läßt sich jedoch im Regelfall aufgrund der Materialdichteerhöhung keine nennenswerte Verbilligung des Produktes erreichen. Eine Ausnahme bilden Microhohlkugeln wie Glashohlkugeln, die aufgrund der niedrigen Dichte zur Verbilligung führen. Diese Microhohlkugeln, die hauptsächlich bei Klebern und Vergußmassen eingesetzt werden, können zur Dichtungsfertigung auf 2K-Anlagen nicht verwendet werden. Wegen der Dosiergenauigkeit werden hier Zahnradpumpen benötigt, wobei Microhohlkugeln aufgrund ihrer mangelhaften Scherfestigkeit zerstört werden. Bei dem erfindungsgemäßen Verfahren werden Microhohlkugeln vorgesehen, die aus expandierten, mikrofeinen Polymerhohlkugeln bestehen, die mit einer für ihre Herstellung benötigten inerten Umhüllung, d.h. einer Umhüllung aus einem anorganischen mineralischen Stoff versehen sind. Diese Füllstoffe sind unter der Bezeichnung "Duralite M" (Firma Omya GmbH, Köln) auf dem Markt erhältlich. Für Verwendung dieser aus Micro-hohlkugeln bestehenden Füllstoffe bei Silikonen, an die bekanntlich hinsichtlich der Dauerstandsfestigkeit, des vor allem bei Dichtungen geforderten Elastizitätsverhaltens und zumeist auch an die Temperaturbeständigkeit besondere Forderungen gestellt werden, sind diese Füllstoffe bisher nicht in Erwägung gezogen worden. Dies dürfte möglicherweise darauf zurückzuführen sein, daß die Polymerhohlkugeln mit etwa 120° bis 150°C nur eine beschränkte Temperaturbeständigkeit aufweisen, die deutlich unter-halb derjenigen der Silikone liegt, und daß überdies die Microhohlkugeln mit Calziumkarbonat umhüllt sind, also einem hygroskopischen Mineralstoff, der in Wasseratmosphäre erweicht, klebrig wird und schmiert und daher für die Silikon-Verarbeitungstechnik unbrauchbar erscheint.

Es hat sich überraschend gezeigt, daß diese aus Microhohlkugeln bestehenden Füllstoffe entgegen der Erwartungen mit Erfolg bei der Herstellung von Silikonerzeugnissen auch dann verwendbar sind, wenn deren Herstellung unter Verwendung einer Zweikomponenten-Misch- und Dosieranlage und additionsvernetzender Silicone erfolgt. Dabei konnte festgestellt werden, daß die so gewonnenen Silikonstoffe, sei es in Form ungeschäumter oder geschäumter Silikonelastomere, durch den Zusatz dieser spezifischen Füllstoffe hinsichtlich ihrer mechanischen Festigkeitseigenschaften und auch hinsichtlich ihres vor allem für ihre Eignung als Dichtstoffe unverzichtbaren Elastizitäts- und Druckverhaltens nicht nennenswert nachteilig beeinflußt werden, obwohl durch den Zusatz dieser Füllstoffe die Dichte der Silikonmasse stark herabgesetzt wird. Ferner hat sich gezeigt, daß mit diesen spezifischen Füllstoffen auch die Verarbeitung der Silikonsysteme im Zweikomponenten-Verfahren mittels der Zweikomponenten-Misch- und Dosieranlagen, vorzugsweise in der Verarbeitungsweise nach der EP 0 416 229 B1, möglich ist und daß schließlich mit der Verwendung dieser Füllstoffe unerwartet eine Temperaturbeständigkeit des geschäumten oder ungeschäumten Silikonpolymers erreichbar ist, die in der Größenordnung von bis zu etwa 200°C liegt. Damit gelingt es, unter Verwendung dieser spezifischen Füllstoffe Silikonerzeugnisse herzustellen, welche bezüglich der Temperaturbeständigkeit die Lücke zwischen den Polyurethanschaumstoffen und den gebräuchlichen Silikonschäumen schließen, aber sich zu einem Preis herstellen lassen, der etwa um den Faktor 3 unter demjenigen der herkömmlichen Silikone liegt. Daß selbst bei verhältnismäßig großem Mengenanteil an dem genannten Füllstoff ein Silikonelastomer mit dieser hohen Temperaturbeständigkeit und mit guten mechanischen Eigenschaften wie die herkömmlichen Silikone erreichbar ist, war nicht von vorneherein abzusehen. Es hat sich überraschend auch gezeigt, daß bei Verwendung der mit CaCO3 umhüllten Microhohlkugeln diese nicht durch die mechanischen Beanspruchungen in der Misch- und Dosieranlage, insbesondere in den Zahnradpumpen und im Mischkopf derselben, zerstört werden und auch keine Störung hinsichtlich Klebrigkeit der Umhüllung und des Silicons eintritt, da offenbar diese Neigung bei der Herstellung der Microhohlkugeln verlorengeht.

Das erfindungsgemäße Verfahren kann mit Vorteil in der Weise durchgeführt werden, wie es in der EP 0 416 229 B1 offenbart ist, auf die hier Bezug genommen wird. Dabei empfiehlt es sich aber, beiden Komponenten des Silikonsystems vor deren Vermischung die genannten Microhohlkugeln zuzusetzen. Dies ermöglicht es, eine verhältnismäßig große Menge an diesem spezifischen Füllstoff in das Silikonsystem einzubringen, wobei beide Komponenten aber ihre für die Verarbeitung auf einer Zweikomponenten-Misch- und Dosieranlage notwendige Viskosität bzw. ihre Fließeigenschaft behalten.

Für die Microhohlkugeln werden vornehmlich solche aus einem Polyacrylnitrilcopolymer oder aus einem Polyvinylidenchloridcopolymer verwendet. Die bekannten Microhohlkugeln weisen, wie erwähnt, eine mineralische Umhüllung aus Calziumkarbonat auf. Selbstverständlich können bei dem erfindungsgemäßen Verfahren auch Microhohlkugeln mit anderer anorganischer, mineralischer Umhüllung verwendet werden, z.B. mit einer solchen aus Talkum, Kieselsäure od.dgl..

Wie in der EP 0 416 229 B1 beschrieben, wird zur Herstellung eines Silikonschaumes bzw. eines Silikondichtungsschaumes der das Silikonpolymer und den Platinkatalysator aufweisenden Komponente (A) zusätzlich Wasser als Treibmittel zugesetzt, vorzugsweise in einer Menge von höchstens 2 Gew.-%, bezogen auf die Gesamtmenge an Silikonpolymer im Silikonsystem.

In weiterer vorteilhafter Ausgestaltung der Erfindung werden die beiden Komponenten des Silikonsystems so eingestellt, daß sie im Mischungsverhältnis von 1:1 auf der Zweikomponenten-Misch- und Dosieranlage verarbeitet werden können, was vor allem im Bezug auf die Sicherheit der Verfahrensdurchführung und auch in Bezug auf die exakte Mengendosierung der Komponenten erhebliche Vorteile bringt. Hierbei weist jede der beiden Komponenten einen Anteil an Silikonpolymer mit mindestens zwei Vinylgruppen im Molekül sowie als Füllstoff und Streckungsmittel die genannten Microhohlkugeln, vorzugsweise in gleichen Mengen auf.

Weitere vorteilhafte Maßnahmen zur Durchführung des erfindungsgemäßen Verfahrens sind in den Ansprüchen 9 und 10 angegeben. Wie erwähnt, kann bei dem erfindungsgemäßen Verfahren die Aushärtung des Silikonsystems ohne Wärmezufuhr, also bei normalen Raumtemperaturen, erfolgen, im allgemeinen auch in situ. Zur Herstellung eines ungeschäumten Silikonelastomers wird ein Reaktionsgemisch der beiden Komponenten ohne Wasser als Treibmittel und ohne Überschuß an Wasserstoffsiloxan verarbeitet. Das aus den beiden Komponenten bestehende Silikonsystem läßt sich auch zur Formverschäumung mit Hilfe einer Hochdruck-Zweikomponenten-Misch- und Dosieranlage bekannter Art verarbeiten.
Bei Verwendung des zweikomponentigen additionsvernetzenden Silikonsystems der genannten Art lassen sich bei Raumtemperatur kurze Aushärtungszeiten erreichen. Das elastische Rückstellvermögen dieser Silikone ist aber für bestimmte Einsatzzwecke der Dichtungen unzureichend. Im Silikonelastomer zurückbleibende Wasserstoffbindungen führen beim späteren Einsatz der Dichtungen bei Druck- und/oder Wärmebelastung derselben zu einer unerwünschten Nachvernetzung und als Folge davon zu einer Herabsetzung des elastischen Rückstellvermögens der Dichtungen. Es ist daher erforderlich, Silikondichtungen dieser Art nach ihrer Aushärtung einer Wärmebehandlung, d.h. einer Temperung über mehrere Stunden oder sogar mehrere Tage bei Temperaturen von 150° bis 200°C zu unterwerfen, um den Restwasserstoff abzuspalten und auf diese Weise die Nachvernetzung zu unterdrücken. Längere Temperungszeiten sind aber vor allem bei der Massenherstellung von Silikondichtungen höchst unerwünscht. Um hier Abhilfe zu schaffen, wird in Weitergestaltung des erfindungsgemäßen Verfahrens ein organischer Platinkatalysator verwendet, der, bezogen auf 1000 g des in der Reaktionsmasse enthaltenen Silikonpolymers, zwischen 300 und 3000 ppm, vorzugsweise 300 bis 900 ppm, Platin enthält. Zweckmäßig wird hierbei als Wasserstoffsiloxan ein Polyhydrogensiloxan mit einem SiH-Gehalt von 15 mmol/g verwendet.
Demgemäß weist das zweikomponentige, additionsvernetzende Silikonsystem ein spezielles Katalisierungssystem, vorzugweise in Kombination mit einem speziellen Vernetzersystem auf. Während bei den herkömmlichen Verfahren Platinkatalysatoren mit einem Platingehalt von zumeist nur 30 ppm je kg Silikonpolymer Verwendung finden, wird bei dem angegebenen Verfahren mit einer um das 10 bis 100-fache größeren Dosierung des Platingehaltes gearbeitet. Es hat sich gezeigt, daß sich mit dieser Maßnahme ein geschäumtes oder ungeschäumtes Silikonelastomer-Erzeugnis mit günstigen Eigenschaften erreichen läßt, das sich vor allem durch ein äußerst hohes elastisches Rückstellvermögen in der Größenordnung von 95 bis 100 % bei zugleich hoher mechanischer Festigkeit und auch verbesserter chemischer Beständigkeit, insbesondere Ölbeständigkeit auszeichnet und bei dessen Herstellung mit äußerst kurzen Temperungszeiten in der Größenordnung von 15 bis 20 min. bei Temperaturen im Bereich von 120° bis 200° C gearbeitet werden kann. In dieser Hinsicht optimale Ergebnisse lassen sich dabei erreichen, wenn als Vernetzer ein stark wirkendes Polyhydrogensiloxan mit 15 mmol/g SiH-Gehalt eingesetzt wird. Der Einsatz eines solchen Polyhydrogensiloxans bringt vor allem auch erhebliche Vorteile im Bezug auf die Reaktivität des Silikonsystems bei Raumtemperatur und bei der Herstellung des geschäumten Silikonelastomers im Bezug auf die Schaumausbeute. Die durch den höheren Platingehalt sich ergebende Kostensteigerung ist im Verhältnis zu der verminderten Temperungs- bzw. Vernetzungszeit vernachlässigbar gering. Der Einfluß von etwaigen Inhibitoren, die die Reaktion bei Raumtemperatur in situ verlängern, z.B. eine erhöhte Vinylkonzentration (FIPFG) oder 2-Butinol (LSR) verhält sich dabei indifferent. Für das als Vernetzer verwendete Polyhydrogensiloxan, d.h. das SiH-haltige Polysiloxan, lassen sich die bekannten und handelsüblichen Wasserstoffsiloxane einsetzen, allerdings vorzugsweise solche mit dem genannten SiH-Anteil.

Im folgenden werden einige Beispiele des erfindungsgemäßen Verfahrens angegeben.

### Beispiel 1:

### Komponente A:

100 g Silikonpolymer mit mindestens zwei Vinylgruppen je Molekül
2 g Wasser
0,2 g Platinkatalysator
10 g elastische Microhohlkugeln in Form von expandierten Polymerhohlkugeln mit mineralischer Umhüllung (CaCO3)

### Komponente B:

100 g Silikonpolymer mit mindestens zwei Vinylgruppe je Molekül
10 g Wasserstoffsiloxan (SiH)
10 g elastische Microhohlkugeln in Form von expandierten Polymerhohlkugeln mit anorganischer bzw. mineralischer Umhüllung (CaCO3).

Die beiden vorgenannten Komponenten A und B werden bei ca. 20°C z.B. auf einer Niederdruck-Zweikomponenten-Misch- und Dosieranlage (z.B. der Firma EDF, A-6912 Hörbranz) verarbeitet. Es wird ein vor allem für Dichtungszwecke hervorragender Silikonschaum mit folgenden Eigenschaften erhalten:
Schaumdichte: 0,15 g/ccm
Shore-A-Härte: 10
Chemikalienbeständigkeit: sehr gut
Ölbeständigkeit: gut
Temperaturbeständigkeit: bis ca. 200°C
Druckbeständigkeit: gut

Der erhaltene Silikonschaum erfüllt die an die üblichen Silikondichtmassen, deren Dichte 0,45 g/ccm beträgt, gestellten Anforderungen, weist jedoch eine um etwa den Faktor 3 verminderte Schaumdichte auf. Die Ersparnis bezüglich der Materialkosten gegenüber den üblichen Silikondichtmassen hat den Faktor 3. Durch einen entsprechenden Einsatz der Treibmittel Wasser und Hydrogensiloxan werden bei der oben genannten Rezeptur bei Verarbeitungstemperaturen von 25 bis 30°C auch Silikonschäume mit Schaumdichten von etwa 0,07 g/ccm erhalten. Diese Silikonschaumstoffe sind vor allem für Formschäume gut geeignet und lassen sich z.B. als Formschäume bei Flugzeugsitzen oder in Gestalt von Formplatten als Hitzeschilde verwenden, wie sie vor allem im Kraftfahrzeugbau als Schutz gegen die Wärmeabstrahlung des Motors benötigt werden.

### Beispiel 2:

Das im Beispiel 1 angegebene Silikonsystem läßt sich auch zur Formverschäumung einsetzen, wobei es mittels einer Hochdruck-Zweikomponenten-Misch- und Dosieranlage verarbeitet wird.

### Beispiel 3:

Falls das Silikonsystem nach Beispiel 1 kein Wasser als Treibmittel und auch kein Überschuß an Hydrogensiloxan enthält, so läßt sich mit ihm ein ungeschäumtes elastisches Silikonelastormer niedriger Dichte herstellen, das sich ebenfalls für Dichtungszwecke gut eignet.

### Beispiel 4:

Das Silikonsystem nach Beispiel 1 wird dahingehend modifiziert, daß bei ihm ein organischer Platinkatalysator verwendet wird, der, bezogen auf 1000 g des in der Reaktionsmasse enthaltenen Silikonpolymers, zwischen 300 und 900 ppm Platin enthält, wobei ein Polyhydrogensiloxan mit einem SiH-Gehalt von 15 mmol/g verwendet wird. Es entsteht hierbei ein Silikonschaum mit hohem Rückstellvermögen, der sich ebenfalls für Dichtungszwecke hervorragend eignet. Das erhaltene Silikonelastomer bzw. das hieraus bestehende Erzeugnis wird einer Temperung über eine Zeitdauer von 15 bis 20 min. bei einer Temperatur von 120°C bis 200°C unterworfen, um den Restwasserstoff abzuspalten und auf diese Weise die Nachvernetzung zu unterdrücken.

Bei der bevorzugten Durchführung des Verfahrens werden beiden Komponenten A und B als Füllstoffe und Streckungsmittel die genannten mineralisch umhüllten elastischen Microhohlkugeln zugesetzt, und zwar jeweils in Mengenanteilen von 2 bis 20 Gew.-%, bevorzugt 6 bis 15 Gew.-%, bezogen auf den Mengenanteil des Silikonpolymers in der betreffenden Komponente. Die umhüllten Microhohlkugeln weisen eine Dichte von 0,05 bis 0,15 g/ccm auf. Sie sind für die Verarbeitung ausreichend scherbeständig und lassen sich selbst mit Zahnradpumpen als Dosierpumpen verarbeiten. Zahnradpumpen haben gegenüber Kolben- und Schlauchpumpen vor allem den Vorteil einer sehr genauen Dosierung, die insbesondere für eine gleichmäßige Dichtungsqualität des Silikondichtschaumes wichtig ist.

Mit dem erfindungsgemäßen Verfahren lassen sich in verarbeitungstechnisch einfacher Weise geschäumte oder auch ungeschäumte Silikonerzeugnisse herstellen, die sich vor allem für Dichtungszwecke hervorragend eignen, insbesondere auch bei thermisch bis etwa 200°C belasteten Dichtungen. Hauptanwendungsgebiete für die erfindungsgemäß hergestellten Silikondichtstoffe sind Gehäuse- und Deckeldichtungen, Dichtungen im Automobilbau und im Gerätebau, grundsätzlich mit Vorteil überall dort, wo Polyurethanschaumstoffe wegen ihrer auf ca. 90°C begrenzten Temperaturbeständigkeit nicht mehr verwendet werden können und/oder die sonstigen guten Eigenschaften der Silikonmassen, wie vor allem ihre chemische Beständigkeit, gefordert werden. Auch können nach dem erfindungsgemäßen Verfahren durch Formverschäumung Silikonschaumstofferzeugnisse, also Silikon-Formschäume sowie schließlich auch ungeschäumte Silikonelastomere hergestellt werden. Die Aushärtung der durch Vermischung der beiden Komponenten A und B erhaltenen Silikon-Reaktionsmassen erfolgt ohne Wärmezufuhr, also bei normalen Umgebungstemperaturen und vorzugsweise in situ, also bei Dichtungen am Sitz derselben, z.B. in einer Dichtungsnut od.dgl. Bei den oben angegebenen Beispielen werden die Komponenten A und B im Mischungsverhältnis von 1:1 mit Hilfe der Zweikomponenten-Misch- und Dosieranlage verarbeitet, wobei vorzugsweise Zahnradpumpen vorgesehen werden.

## Patentansprüche

1. Verfahren zum Herstellen eines geschäumten oder ungeschäumten weich-elastischen Silikonelastomers, insbesondere für Dichtungszwecke, wie vor allem für Gehäuse- und Deckeldichtungen, Dichtungen im Automobilbau u.dgl., unter Verwendung eines zweikomponentigen, additionsvernetzenden Silikonsystems, wobei die Komponente A, enthaltend
- Silikonpolymer mit mindestens zwei Vinylgruppen je Molekül
- einen Platinkatalysator sowie
- ggf. weitere Zusätze (einzeln oder in Kombination), wie Füllstoff, Farbpigment, Haftverbesserer, Alterungsschutzmittel, Verstärkungsstoffe
mit der Vernetzerkomponente B, enthaltend
- Wasserstoffsiloxan und ggf. weitere Zusätze
mittels einer Zweikomponenten-Misch- und Dosieranlage verarbeitet und ohne Wärmezufuhr zur Reaktion gebracht werden, **dadurch gekennzeichnet, daß** mindestens einer der beiden Komponenten A und B als Füllstoff und Streckungsmittel elastische Microhohlkugeln in Form von expandierten Polymerhohlkugeln zugesetzt werden, die mit einer anorganischen mineralischen Umhüllung versehen sind.

2. Verfahren nach Anspruch 1, **dadurch gekennzeichnet, daß** beiden Komponenten A und B vor ihrer Vermischung die genannten Microhohlkugeln zugesetzt werden.

3. Verfahren nach Anspruch 1 oder 2, **dadurch gekennzeichnet, daß** Microhohlkugeln eingesetzt werden, deren Korngröße 200 µm nicht überschreitet, vorzugsweise bei 20 bis 50 µm liegt.

4. Verfahren nach einem der Ansprüche 1 bis 3, **dadurch gekennzeichnet, da**ß der Gesamtanteil an dem aus Microhohlkugeln bestehenden Füllstoff in dem aus den Komponenten A und B bestehenden Silikonsystem 30 Gew.-%, bezogen auf den Gewichtsanteil des eingesetzten Silikonpolymers, nicht übersteigt, vorzugsweise bei 2 bis 20 Gew.-% des Silikonpolymers liegt.

5. Verfahren nach einem der Ansprüche 1 bis 4, **dadurch gekennzeichnet, daß** Microhohlkugeln aus Polyacrylnitrilcopolymer oder Polyvinylidenchloridcopolymer verwendet werden.

6. Verfahren nach einem der Ansprüche 1 bis 5, **dadurch gekennzeichnet, daß** Microhohlkugeln verwendet werden, deren mineralische Umhüllung aus Calziumkarbonat (CaC03) besteht.

7. Verfahren nach einem der Ansprüche 1 bis 6, **dadurch gekennzeichnet, daß** zur Herstellung eines Silikonschaumes der Komponente A zusätzlich Wasser als Treibmittel zugesetzt wird, vorzugsweise in einer Menge von höchssten 2 Gew.-%, bezogen auf die Gesamtmenge an Silikonpolymer.

8. Verfahren nach einem der Ansprüche 1 bis 7, **dadurch gekennzeichnet, daß** die Komponenten A und B im Mischungsverhältnis von 1:1 auf der Zweikomponenten-Misch- und Dosieranlage verarbeitet werden, wobei jede der beiden Komponenten A und B Silikonpolymer mit mindestens zwei Vinylgruppen je Molekül sowie als Füllstoff die genannten Micro-hohlkugeln, vorzugsweise in gleichen Mengen enthält.

9. Verfahren nach einem der Ansprüche 1 bis 8, **dadurch gekennzeichnet, daß** zur Herstellung des geschäumten Silikonelastomers folgende Komponenten verarbeitet werden:
Komponente A: 100 g Silikonpolymer mit mindestens zwei Vinylgruppen je Molekül
2 g Wasser
0,2 g Platinkatalysator
10 g expandierte Microhohlkugeln, verhüllt
z.B. mit CaCO₃,
Komponente B: 100 g Silikonpolymer mit mindestens zwei Vinylgruppen je Molekül
10 g Wasserstoffsiloxan, z.B. Dimethylhydrogensiloxan,
10 g expandierte Microhohlkugeln, verhüllt mit z.B. CaCO₃,
wobei die beiden vorgenannten Komponenten A und B bei Raumtemperatur von z.B. 20°C auf einer Niederdruck-Zweikomponenten-Misch- und Dosieranlage verarbeitet werden.

10. Verfahren nach einem der Ansprüche 1 bis 9, **dadurch gekennzeichnet, daß** die Verarbeitung der Komponenten A und B, wie bekannt, auf einer Niederdruck-Zweikomponenten-Misch- und Dosieranlage bei einer Drehzahl von 3000 bis 8000 U/min. des angetriebenen Mischorgans des Mischkopfes erfolgt, wobei der axiale Mischkanal im Mischkopf so eingestellt wird, daß der Spalt zwischen der Kanalwandung und dem axial im Mischkanal angeordneten rotierenden Mischorgan 0,5 bis 3 mm beträgt.

11. Verfahren nach einem der Ansprüche 1 bis 9, **dadurch gekennzeichnet, daß** das aus den Komponenten A und B bestehende Silikonsystem zur Formverschäumung mittels einer Hochdruck-Zweikomponenten-Misch- und Dosieranlage verarbeitet wird.

12. Verfahren nach einem der Ansprüche 1 bis 11, **dadurch gekennzeichnet, daß** zur Herstellung eines ungeschäumten Silikonelastomers das Reaktionsgemisch der Komponenten A und B ohne Wasser als Treibmittel und ohne Überschuß an Wasserstoffsiloxan verarbeitet wird.

13. Verfahren nach einem der Ansprüche 1 bis 12, **dadurch gekennzeichnet, daß** ein organischer Platinkatalysator verwendet wird, der, bezogen auf 1000 g des in der Reaktionsmasse enthaltenen Silikonpolymers, zwischen 300 und 3000 ppm, vorzugsweise 300 bis 900 ppm, Platin enthält.

14. Verfahren nach Anspruch 13, **dadurch gekennzeichnet, daß** als Wasserstoffsiloxan ein Polyhydrogensiloxan mit einem SiH-Gehalt von 15 mmol/g verwendet wird.

15. Verfahren nach Anspruch 13 oder 14, **dadurch gekennzeichnet, daß** das Silikonelastomer bzw. das hieraus bestehende Erzeugnis einer Temperung über eine Zeitdauer von 15 bis 20 min. bei einer Temperatur von 120° bis 150°C unterworfen wird.

## Claims

1. Process for the manufacture of a foamed, or not foamed, soft-elastic silicone elastomer, in particular for sealing purposes, for example mainly for casing and cover seals, seals in automobile manufacture and the like, using a two-component addition-bonding silicone system, in which component A, which contains
- silicone polymer with at least two vinyl groups per molecule,
- a platinum catalyst as well as,
- if appropriate, further additives (individually or in a combination), such as fillers, dye pigment, adhesion improver, ageing protective means, reinforcing substances,
is together with bonding component B, which contains
- hydrogen siloxane and, if appropriate, further additives,
processed by means of a two-component mixing and apportioning device and reacted without delivery of heat, **characterised in that** at least to one of the two components A and B are added, as a filler material and adulterant, elastic micro spheres in the form of expanded polymer spheres which are provided with an inorganic mineral coating.

2. Process according to Claim 1, **characterised in that** the aforementioned micro spheres are added to both components A and B prior to them being mixed.

3. Process according to Claim or 2, **characterised in that** micro spheres of a core size not exceeding 200 µm, preferably between 20 and 50 µm, are used.

4. Process according to one of Claims 1 to 3, **characterised in that** the total proportion of filler material composed of micro spheres in the silicone system consisting of components A and B does not exceed 30 %-by-weight relative to the weight proportion of applied silicone polymer, preferably between 2 and 20 %-by-weight of the silicone polymer.

5. Process according to one of Claims 1 to 4, **characterised in that** micro spheres of polyacrylnitrile copolymer or polyvinylidenchloride copolymer are used.

6. Process according to one of Claims 1 to 5, **characterised in that** micro spheres are used the mineral coating of which consists of calcium carbonate (CaCO₃).

7. Process according to one of Claims to 6, **characterised in that**, for the purpose of producing a silicone foam, water is added as a foaming agent to component A, preferably at a volume of maximum 2 %-by-weight relative to the total volume of silicone polymer.

8. Process according to one of Claims 1 to 7, **characterised in that** components A and B are processed at a mixing ratio of 1:1 in the two-component mixing and apportioning device, and that each of the two components A and B contains silicone polymer with at least two vinyl groups per molecule as well as a filler material in the form of the aforementioned micro spheres, preferably in equal amounts.

9. Process according to one of Claims 1 to 8, **characterised in that** the following components are processed for manufacturing the foamed silicone elastomer:
Component A: 100 g silicone polymer with at least two vinyl groups per molecule,
2 g water
0.2 g platinum catalyst
10 g expanded micro spheres, encased, for example, with CaCO₃.
Component B: 100 g silicone polymer with at least two vinyl groups per molecule,
10 g hydrogen siloxane, for example dimethyl hydrogen siloxane,
10 g expanded micro spheres, encased, for example, with CaCO₃,
and the two aforementioned components A and B are processed at a room temperature of, for example, 20°C on a low-pressure two-component mixing and apportioning device.

10. Process according to one of Claims 1 to 9, **characterised in that** processing of components A and B is, in a conventional manner, carried out on a low-pressure two-component mixing and apportioning device at a rotation of 3,000 to 8,000 rpm of the driven mixing element of the mixer head, and the axial mixing channel in the mixer head is set in such a manner that the gap between the channel wall and the mixing element which is arranged axially in the mixing channel is between 0.5 and 3 mm.

11. Process according to one of Claims to 9, **characterised in that** the silicone system, which is composed of components A and B and serves shape foaming, is processed by means of a highpressure two-component mixing and apportioning device.

12. Process according to one of Claims 1 to 11, **characterised in that**, for the purpose of manufacturing a not foamed silicone elastomer, the reaction mixture of components A and B is processed without water as a propellant and without surplus of hydrogen siloxane.

13. Process according to one of Claims 1 to 12, **characterised in that** an organic platinum catalyst is used which contains, relative to 1,000 g of silicone polymer contained in the reaction substance, between 300 and 3,000 ppm, preferably between 300 and 900 ppm, platinum.

14. Process according to Claim 13, **characterised in that** the hydrogen siloxane is a polyhydrogen siloxane with an SiH content of 15 mmol/g.

15. Process according to Claim 13 or 14, **characterised in that** the silicone elastomer or the product consisting thereof is subjected to tempering over a period between 15 and 20 mins. at a temperature between 120° and 150°C.

## Revendications

1. Procédé de préparation d'un élastomère de silicone, mou-élastique, alvéolaire ou non alvéolaire, en particulier à des fins d'étanchéité, ainsi que surtout pour des joints d'étanchéité pour carters et pour couvercles, des joints d'étanchéité destinés à la construction automobile et analogue, avec utilisation d'un système silicone à deux composants réticulant par addition, le composant A contenant :
- un polymère de silicone avec au moins deux groupes vinyle pour chaque molécule,
- un catalyseur au platine, ainsi que
- le cas échéant d'autres additifs (individuellement ou en combinaison), tels qu'une charge, un pigment de coloration, un amélioreur d'adhérence, un agent de protection contre le vieillissement, des substances de renforcement,
le composant B du réticulant contenant :
- un siloxane d'hydrogène et, le cas échéant, d'autres additifs
travaillé au moyen d'une installation de mélange et de dosage, travaillant sur deux composants et sans apport de chaleur pour obtenir la réaction, caractérisé en ce que sont ajoutées à au moins l'un des deux composants A et B, à titre de charge et d'agent d'étirement, des microbilles creuses élastiques se présentant sous la forme de billes creuses de polymère expansées, pourvues d'un enveloppement minéral non organique.

2. Procédé selon la revendication 1, caractérisé en ce que les microbilles creuses citées sont ajoutées aux deux composants A et B avant leur mélange.

3. Procédé selon la revendication 1 ou 2, caractérisé en ce que sont utilisées des microbilles creuses dont la taille de grain ne dépasse pas 20U µm et de préférence est située dans la plage allant de 20 à 50 µm.

4. Procédé selon l'une des revendications 1 à 3, caractérisé en ce que la proportion totale de charge constituée de microbilles creuses dans le système silicone constitué des composants A et B ne dépasse pas 30 % en poids par rapport à la proportion en poids du polymère de silicone utilisé, de préférence est située dans la plage allant de 2 à 20 % en poids du polymère de silicone.

5. Procédé selon l'une des revendications 1 à 4, caractérisé en ce que l'on utilise des microbilles creuses en copolymère de polyacrylnitrile ou en copolymère de chlorure de polyvinylidène.

6. Procédé selon l'une des revendications 1 à 5, caractérisé en ce que l'on utilise des microbilles creuses dont l'enveloppement minéral est constitué de carbonate de calcium (CaCO₃).

7. Procédé selon l'une des revendications 1 à 6, caractérisé en ce que l'on ajoute pour la préparation d'une mousse de silicone, au composant A en plus de l'eau à titre d'agent gonflant, de préférence en une quantité maximale de 2 % en poids par rapport à la quantité globale de polymère de silicone.

8. Procédé selon l'une des revendications 1 à 7, caractérisé en ce que les composants A et B sont travaillés en un rapport de mélange de 1:1 dans l'installation de mélange et de dosage à deux composants, chacun des deux composants A et B contenant au moins deux groupes vinyle par molécule ainsi que, à titre de charge, les microbilles creuses citées, de préférence en des quantités égales.

9. Procédé selon l'une des revendications 1 à 8, caractérisé en ce que, pour la préparation de l'élastomère alvéolaire au silicone, on travaille avec les composants ci-après :
| | |
|---|---|
| Composant A : | |
| 100 g | de polymère de silicone ayant au moins deux groupes vinyle par molécule |
| 2 g | d'eau |
| 0,2 g | de platine utilisé comme catalyseur |
| 10 g | de microbilles creuses expansées, enveloppées, par exemple, avec du CaCO₃, |
| Composant B : | |
|---|---|
| 100 g | de polymère de silicone avec au moins deux groupes vinyle par molécule |
| 10 g | de siloxane d'hydrogène, par exemple du diméthylhydrogènesiloxane, |
| 10 g | de microbilles creuses expansées, enveloppées, par exemple, avec du CaCO₃, |
les deux composants A et B précités étant travaillés à la température ambiante de, par exemple, 20 °C sur une installation de mélange et de dosage pour deux composants travaillant à basse pression.

10. Procédé selon l'une des revendications 1 à 9, caractérisé en ce que la transformation des composants A et B est effectuée, comme ceci est connu, sur une installation de mélange et de dosage à deux composants travaillant à basse pression, à une vitesse rotation de 3000 à 8000 tr/min. pour ce qui concerne l'organe de mélange entraîné de la tête de mélange, le canal de mélange axial ménagé dans la tête de mélange étant réglé de manière que l'intervalle existant entre la paroi de canal et l'organe de mélange tournant, disposé axialement dans le canal de mélange, soit de 0,5 à 3 mm.

11. Procédé selon l'une des revendications 1 à 9, caractérisé en ce que le système silicone constitué des composants A et B pour produire un moussage suivant la forme d'un moule est travaillé au moyen d'une installation de mélange et de dosage à deux composants travaillant sous haute pression.

12. Procédé selon l'une des revendications 1 à 11, caractérisé en ce que, pour préparer un élastomère de silicone non alvéolaire, le mélange de réaction constitué des composants A et B est travaillé sans eau comme agent gonflant et sans excès de siloxane d'hydrogène.

13. Procédé selon l'une des revendications 1 à 12, caractérisé en ce qu'on utilise comme catalyseur un catalyseur organique à base de platine qui contient, en se référant à 1000 g du polymère de silicone contenu dans la masse de réaction, une quantité comprise entre 300 et 3000 ppm, de préférence 300 à 900 ppm de platine.

14. Procédé selon la revendication 13, caractérisé en ce qu'on utilise comme siloxane d'hydrogène un polysiloxane d'hydrogène ayant une teneur en SiH de 15 mmol/g.

15. Procédé selon la revendication 13 ou 14, caractérisé en ce que l'élastomère de silicone, ou le produit constitué à partir de lui, est soumis à un recuit conduit sur une durée de 15 à 20 min. à une température de 120 °C à 150 °C.
